# EUROPÄISCHE PATENTSCHRIFT

(11) **EP 3 426 847 B1**
(45) Veröffentlichungstag und Bekanntmachung des Hinweises auf die Patenterteilung: **15.06.2022**
(21) Anmeldenummer: 17714400.3
(22) Anmeldetag: 08.03.2017
(51) Int. Cl.: E02D 29/12

(54) **SCHACHTELEMENT**
ELEMENT OF A MANHOLE
ELEMENT D'UN REGARD DE CHAUSSEE

(30) Priorität: 09.03.2016 DE 102016104333
(43) Veröffentlichungstag der Anmeldung: 16.01.2019
(73) Patentinhaber: Buchstaller, Jürgen, 90475 Nürnberg (DE)
(72) Erfinder: Buchstaller, Jürgen, 90475 Nürnberg (DE)
(74) Vertreter: Hafner & Kohl PartmbB
(86) Internationale Anmeldenummer: PCT/EP2017/055488
(87) Internationale Veröffentlichungsnummer: WO 2017/153496

(56) Entgegenhaltungen:
- DE-B3-102012 013 618
- DE-U1- 29 914 656

## Beschreibung

Die Erfindung betrifft ein Übertragungssystem zur Übertragung von Kommunikationssignalen an wenigstens einen Kommunikationspartner, welches wenigstens zwei Schachtelemente umfasst.

Schachtelemente sind zur Ausbildung von Schachtbauwerken, welche z. B. einen Teil eines Ent- oder Versorgungsschachtsystems, d. h. z. B. einer Kanalisation, bilden, grundsätzlich bekannt.

Weiterhin ist bekannt, dass die Übertragung, d. h. das Senden und Empfangen, von Kommunikationssignalen durch entsprechende Schachtelemente bzw. Schachtbauwerke problematisch sein kann. Dies gilt insbesondere für unter der Erdoberfläche angeordnete Schachtelemente bzw. Schachtbauwerke. Ein bekanntes Problem betrifft konkret die Übertragung von Kommunikationssignalen zwischen einer unter der Erdoberfläche angeordneten Signalquelle und einem oberhalb der Erdoberfläche angeordneten Signalempfänger (oder umgekehrt); die Kommunikationssignale müssen hier durch das Schachtbauwerk respektive die dieses bildenden Schachtelemente übertragen werden.

Bei entsprechenden Signalquellen handelt es sich typischerweise um gesonderte, d. h. nicht baulich mit dem Schachtbauwerk verbundene, Sende- und/oder Empfangseinrichtungen, welche den in dem jeweiligen Schachtbauwerk herrschenden Umgebungsbedingungen ausgesetzt sind.

DE 299 14 656 U1 offenbart eine Vorrichtung zur Überwachung des Wasserstandes in einem durch einen entfernbaren Deckel verschlossenen Schacht.

Der Erfindung liegt die Aufgabe zugrunde, ein demgegenüber verbessertes Übertragungssystem anzugeben.

Die Aufgabe wird insbesondere durch ein Übertragungssystem gemäß Anspruch 1 gelöst. Die hierzu abhängigen Ansprüche betreffen besondere Ausführungsformen des Übertragungssystems.

Das hierin beschriebene Übertragungssystem zur Übertragung von Kommunikationssignalen an wenigstens einen Kommunikationspartner zeichnet sich dadurch aus, dass es wenigstens zwei miteinander zur Übertragung von Kommunikationssignalen kommunizierende Schachtelemente zur Übertragung von Kommunikationssignalen kommunizierende Schachtelemente zur Ausbildung wenigstens eines Abschnitts eines Schachtbauwerks als Teile eines oder mehrerer Schachtbauwerke umfasst, welche jeweils einen einen Hohlraum begrenzenden Grundkörper umfassen, wobei in den Grundkörper wenigstens eine Erfassungseinrichtung, welche zur Erfassung wenigstens einer Erfassungsgröße eingerichtet ist, und eine dieser zugeordnete Übertragungseinrichtung, welche zur Übertragung von von der Erfassungseinrichtung erfassten Erfassungsgrößen an wenigstens einen Kommunikationspartner eingerichtet ist, integriert ist, wobei das Übertragungssystem zur Übertragung von Kommunikationssignalen innerhalb eines Schachtbauwerks und/oder zwischen mehreren Schachbauwerken eingerichtet ist.

Ein jeweiliges Schachtelement dient im Allgemeinen der Ausbildung eines Schachtbauwerks. Das Schachtbauwerk kann grundsätzlich zumindest abschnittsweise oberhalb oder zumindest abschnittsweise unterhalb der Erdoberfläche angeordnet oder ausgebildet sein. Das Schachtbauwerk kann z. B. einen Teil eines zumindest abschnittsweise oberhalb oder zumindest abschnittsweise unterhalb der Erdoberfläche verlaufenden Ent- oder Versorgungsschachtsystems bilden. Ein Beispiel für ein unterhalb der Erdoberfläche verlaufendes Ent- oder Versorgungsschachtsystem ist eine Kanalisation.

Ein jeweiliges Schachtelement umfasst einen einen Hohlraum begrenzenden Grundkörper. Der Grundkörper hat typischerweise, jedoch nicht zwingend eine hohlzylindrische geometrische Grundform; denkbar sind jedoch auch andere, d. h. z. B. (viel)eckige geometrische Grundformen.

Je nach funktioneller bzw. konstruktiver Ausgestaltung eines jeweiligen Schachtelements kann der Grundkörper z. B. aus unterschiedlichen Bau- oder Werkstoffen, insbesondere aus den Werkstoffgruppen Metalle, Keramiken, Kunststoffe, gebildet sein. Bevorzugt kann der Grundkörper aus einem, gegebenenfalls aushärtbaren und/oder gießfähigen, Baustoff, z. B. Beton, gebildet sein. Weiter bevorzugt kann der Grundkörper aus einem, insbesondere extrusions- bzw. spritzgießfähigen, thermoplastischen, gegebenenfalls polyolefinischen, Kunststoff, d. h. z. B. PA, PC, PE, PP, PS, gebildet sein. Selbstverständlich kann der Grundkörper unterschiedliche Grundkörperabschnitte aus unterschiedlichen Materialien umfassen.

In den Grundkörper eines jeweiligen Schachtelements (im Weiteren "Grundkörper") ist eine Erfassungseinrichtung und eine der Erfassungseinrichtung zugeordnete, d. h. mit dieser datenmäßig gekoppelte, Übertragungseinrichtung integriert. Unter der Integration ist eine bauliche Verbindung der Erfassungseinrichtung bzw. der Übertragungseinrichtung mit dem Grundkörper zu verstehen. Die Erfassungseinrichtung bzw. die Übertragungseinrichtung ist, typischerweise vollständig, in einer Wandung des Grundkörpers des jeweiligen Schachtelements angeordnet oder ausgebildet. Die bauliche Verbindung kann (beschädigungs- bzw. zerstörungsfrei) lösbar bzw. nicht (beschädigungs- bzw. zerstörungsfrei) lösbar sein. In dem ersten Fall kann die Erfassungseinrichtung bzw. die dieser zugehörigen Komponenten, d. h. z. B. Erfassungselemente, respektive die Übertragungseinrichtung bzw. die dieser zugehörigen Komponenten, d. h. z. B. Übertragungselemente, (unmittelbar) von dem den Grundkörper bildenden Material umgeben sein; die Erfassungseinrichtung respektive die Übertragungseinrichtung kann z. B. mit dem den Grundkörper bildenden Material im Rahmen der Herstellung des Grundkörpers umgossen sein. In dem zweiten Fall kann die Erfassungseinrichtung bzw. die dieser zugehörigen Komponenten respektive die Übertragungseinrichtung bzw. die dieser zugehörigen Komponenten in hierfür vorgesehenen, insbesondere in einem freiliegenden oder freilegbaren, mithin zugänglichen, Bereich des Grundkörpers angeordneten oder ausgebildeten, z. B. durch Ausnehmungen in dem Grundkörper gebildeten, grundkörperseitigen Aufnahmebereichen angeordnet oder ausgebildet sein. Für das Beispiel eines eine hohlzylindrische Grundform aufweisenden Grundkörpers können entsprechende Aufnahmebereiche z. B. im Bereich einer äußeren und/oder inneren Mantelfläche und/oder im Bereich einer ringartigen bzw. förmigen Stirnfläche angeordnet oder ausgebildet sein. Ein entsprechender Aufnahmebereich kann über ein diesem zugeordnetes, z. B. klappenartiges, Verschlusselement (reversibel) verschließbar sein. In dem verschlossenen Zustand ist die in dem Aufnahmebereich aufgenommene Einrichtung vor äußeren Einflüssen geschützt, in dem offenen Zustand ist ein Zugriff auf die in dem Aufnahmebereich aufgenommene Einrichtung möglich.

Die Erfassungseinrichtung ist zur Erfassung wenigstens einer Erfassungsgröße eingerichtet. Bei einer vermittels der Erfassungseinrichtung erfassbaren Erfassungsgröße kann es sich um eine chemische und/oder physikalische Größe, d. h. z. B. Atmosphäre, Dichte, Druck, Feuchtigkeit, pH-Wert, Temperatur, etc., des Schachtelements und/oder eines innerhalb des durch den Grundkörper begrenzten Hohlraums, im Weiteren innerhalb eines das Schachtelement aufnehmenden Schachtbauwerks, strömenden (fluiden) Mediums und/oder in einer Umgebung um das Schachtelement handeln. Entsprechende chemische und/oder physikalische Größen lassen sich insbesondere für ein in dem durch den Grundkörper begrenzten Hohlraum befindliches (fluides) Medium, d. h. z. B. Abwasser, Gas, etc., erfassen. Für ein in dem durch den Grundkörper begrenzten Hohlraum strömendes (fluides) Medium lassen sich auch Strömungsparameter, d. h. z. B. die Strömungsgeschwindigkeit, erfassen. Bei einer vermittels der Erfassungseinrichtung erfassbaren Erfassungsgröße kann es sich auch um einen Pegel (Wasserstand) in dem durch den Grundkörper begrenzten Hohlraum, im Weiteren innerhalb eines das Schachtelement aufnehmenden Schachtbauwerks, handeln. Mithin lässt sich ein (veränderlicher) Pegel eines in dem durch den Grundkörper begrenzten Hohlraum befindlichen, in diesem z. B. auf- oder absteigenden, (fluiden) Mediums erfassen. Insgesamt kann die Erfassungseinrichtung sonach zur Erfassung einer wenigstens einen chemischen und/oder physikalischen Parameter, insbesondere Atmosphäre, Dichte, Druck, Feuchtigkeit, pH-Wert, Temperatur, des Schachtelements und/oder eines innerhalb des durch den Grundkörper begrenzten Hohlraums strömenden Mediums beschreibenden Erfassungsgröße eingerichtet ist, und/oder zur Erfassung einer einen Strömungsparameter eines innerhalb des durch den Grundkörper begrenzten Hohlraums strömenden Mediums beschreibenden Erfassungsgröße eingerichtet ist, und/oder zur Erfassung einer einen Pegel eines innerhalb des durch den Grundkörper begrenzten Hohlraums strömenden Mediums beschreibenden Erfassungsgröße eingerichtet sein.

Zur Erfassung jeweiliger Erfassungsgrößen umfasst die Erfassungseinrichtung typischerweise eine Anzahl an im Hinblick auf die jeweils zu erfassende Erfassungsgröße geeigneten, z. B. messsonden- oder sensorartig ausgebildeten, Erfassungselementen. Die Erfassungselemente können entsprechende Erfassungsgrößen z. B. akustisch, elektrisch, elektromagnetisch oder optisch erfassen. Bei einem Erfassungselement kann es sich demnach z. B. um einen akustischen Sensor, d. h. z. B. einen Ultraschallsensor, einen elektrischen Sensor, d. h. z. B. einen kapazitiven Sensor, einen elektromagnetischen Sensor, d. h. z. B. einen induktiven Sensor, oder einen optischen Sensor, d. h. z. B. eine Kamera, insbesondere eine CCD- oder Infrarotkamera, handeln. Die vorstehende Aufzählung entsprechender Erfassungselemente ist nicht abschließend. Selbstverständlich kann ein und dieselbe Erfassungsgröße vermittels unterschiedlich ausgebildeter Erfassungselemente erfasst werden. Derart ist eine Plausibilisierung vermittels unterschiedlicher Erfassungselemente erfasster Erfassungsgrößen realisierbar.

Die Übertragungseinrichtung ist wenigstens zur Übertragung von von der Erfassungseinrichtung erfassten Erfassungsgrößen, im Allgemeinen Kommunikationssignalen, d. h. insbesondere Daten, an wenigstens einen Kommunikationspartner eingerichtet. Bei einem Kommunikationspartner kann es sich um eine (mobile oder stationäre) weitere Übertragungseinrichtung, z. B. in Form eines Mobiltelefons, Smartphones, Tablet-PCs, Laptops, etc., und/oder um ein globales oder lokales Daten- bzw. Übertragungsnetzwerk (Intranet, Internet) handeln. Typischerweise ist die Übertragungseinrichtung auch zum Empfang von von wenigstens einem Kommunikationspartner übertragenen Kommunikationssignalen eingerichtet. Eine entsprechend eingerichtete Übertragungseinrichtung kann auch als Sende- und/oder Empfangseinrichtung bezeichnet bzw. erachtet werden.

Die Übertragungseinrichtung umfasst zur Übertragung, d. h. zum Senden sowie (gegebenenfalls zum Empfangen) von Kommunikationssignalen geeignete Übertragungselemente (Sende- bzw. Empfangselemente). Ein freies Ende wenigstens eines Übertragungselements kann aus einem freiliegenden Abschnitt, insbesondere einem freiliegenden Stirnflächenabschnitt, des Grundkörpers ragen. Über ein entsprechend freilegendes Ende kann das Übertragungselement Kommunikationssignale an einen Kommunikationspartner übertragen oder an ein weiteres Übertragungselement anschließbar sein.

Die Übertragung entsprechender Kommunikationssignale vermittels eines Übertragungselements kann grundsätzlich drahtgebunden ("wired") oder kabellos ("wireless") erfolgen; zur kabellosen Übertragung kommen grundsätzlich jedwede kabellose Übertragungsarten bzw. -standards in Betracht; lediglich beispielhaft wird auf Bluetooth, GSM, DECT oder im Sub-Gigahertzbereich arbeitende Übertragungsarten bzw. -standards verwiesen. Zur Übertragung kommen auch lizensierte oder lizenzfreie Bänder in Betracht, insbesondere alle ISM-Bänder (engl. Industrial, Scientific and Medical Band). Für ISM-Bänder gilt, dass diese auch zur Übertragung von Audio- und/oder Videodaten verwendet werden können.

Zur drahtlosen Übertragung umfasst die Übertragungseinrichtung wenigstens ein Drahtlosübertragungselement, d. h. insbesondere ein Antennenelement. Bei einem Drahtlosübertragungselement handelt es sich typischerweise um ein längliches, elektrisch leitfähiges Bauelement, welches sich zumindest abschnittsweise durch den Grundkörper erstreckt. Mehrere Drahtlosübertragungselemente können winklig, insbesondere parallel, bezüglich einer Grundkörper(zentral)achse angeordnet sein, sodass sich gegebenenfalls eine flächige Anordnung ergibt. Mehrere Drahtlosübertragungselemente können einander in wenigstens einem Kreuzungspunkt kreuzend angeordnet sein, sodass sich eine flächige, gegebenenfalls gitterartige, Anordnung ergibt. Über die geometrischen Abmessungen sowie die Anordnung und Ausrichtung entsprechender Drahtlosübertragungselemente lassen sich bestimmte Sende- (sowie gegebenenfalls Empfangseigenschaften) der Übertragungseinrichtung realisieren.

Der Erfassungseinrichtung kann eine, insbesondere in zu der Erfassungseinrichtung und der Übertragungseinrichtung entsprechender Weise ebenso in den Grundkörper integrierte, Auswerteeinrichtung zugeordnet sein. Die Auswerteeinrichtung ist zur Auswertung der von der Erfassungseinrichtungseinrichtung erfassten Erfassungsgrößen im Hinblick auf wenigstens ein Auswertungskriterium eingerichtet. Die Auswerteeinrichtung umfasst hierfür im Hinblick auf jeweilige Auswertungskriterien programmierte Auswertealgorithmen. Ein entsprechendes Auswertungskriterium kann eine schachtspezifische Auswertung erfasster Erfassungsgrößen ermöglichen. Hierunter ist eine Auswertung erfasster Erfassungsgrößen im Hinblick auf bestimmte Charakteristika eines Schachtbauwerks bzw. eines in dem Schachtbauwerk befindlichen (fluiden) Mediums zu verstehen. Beispielsweise kann die chemische Zusammensetzung, die Dichte, der Druck, die Temperatur, etc. eines in dem Hohlraum befindlichen bzw. strömenden (fluiden) Mediums im Hinblick auf bestimmte Grenzwerte ausgewertet werden. Denkbar ist auch, dass ein in dem Hohlraum befindliches bzw. strömendes (fluides) Medium qualitativ oder quantitativ im Hinblick auf das Vorhandensein bestimmter chemischer Substanzen, das Über- oder Unterschreiten bestimmter Grenzwerte, insbesondere auch eines Wasserstandgrenzwerts, etc. ausgewertet wird.

Ein entsprechendes Auswertungskriterium kann jedoch auch eine nicht-schachtspezifische Auswertung erfasster Erfassungsgrößen ermöglichen. Hierunter ist eine Auswertung erfasster Erfassungsgrößen im Hinblick auf bestimmte Charakteristika in der Umgebung um das Schachtbauwerk zu verstehen. Beispielsweise kann ein Objekt (unmittelbar) oberhalb des Schachtelements über geeignete der Erfassungseinrichtung zugehörige Erfassungselemente, d. h. z. B. Dehnungs- oder Druckerfassungselemente, welche zweckmäßig umfangsmäßig verteilt in den Grundkörper integriert sind, ermittelt werden, da das Gewicht des Objekts (typischerweise unter der Voraussetzung eines gewissen Mindestgewichts) in dem Schachtelement eine spezielle Kraftverteilung, z. B. Druckverteilung, erzeugt, d. h. sich speziell auf die gegebenen Kräfteverhältnisse, z. B. Druckverhältnisse, in dem Schachtelement auswirkt. In entsprechender Weise können Bewegungen bzw. Bewegungsprofile eines Objekts, gegebenenfalls örtlich, insbesondere richtungsabhängig, und/oder zeitlich aufgelöst, über das Schachtelement erfasst werden.

Konkret kann z. B. ein Verkehrsstrom oberhalb des Schachtelements ermittelt und, gegebenenfalls örtlich, insbesondere richtungsabhängig, und/oder zeitlich aufgelöst, im Hinblick auf bestimmte verkehrstechnische Kenngrößen, d. h. z. B. spezifische Verkehrsteilnehmer, (mittlere) Verkehrsdichte, (mittlere) Verkehrsgeschwindigkeit, etc., kurz im Zusammenhang mit dem Verkehrsfluss stehende verkehrstechnische Kenngrößen ausgewertet werden. Befindet sich das Schachtelement im Bereich eines Eingangs zu einem Gebäude kann über eine entsprechende Auswertung die Anzahl an in das Gebäude eingehender oder aus dem Gebäude ausgehendender Objekte ermittelt werden. Handelt es sich bei dem Gebäude um eine Garage kann z. B. eine Anzahl ein- und ausfahrender Fahrzeuge ermittelt werden.

Auf Grundlage der Auswertung entsprechender Erfassungsgrößen kann die Auswerteeinrichtung zur Erzeugung von Steuergrößen zur Steuerung wenigstens einer steuerbaren technischen Einrichtung eingerichtet sein. Das Schachtelement kann über die Übertragungseinrichtung mit der technischen Einrichtung koppelbar oder gekoppelt sein. Für das vorgenannte Beispiel einer Ermittlung eines in eine Garage einfahrenden Fahrzeugs kann die Auswerteeinrichtung z. B. zur Erzeugung von eine Einfahrtsbeschränkungseinrichtung, d. h. z. B. eine Schranke, ein Tor, etc., aufhebenden (und gegebenenfalls wiederherstellenden) Steuergrößen eingerichtet sein. Entsprechende Steuergrößen können z. B. über die in das Schachtelement integrierte Übertragungseinrichtung an eine der jeweiligen Einfahrtsbeschränkungseinrichtung zugeordnete Empfangseinrichtung übertragen und dort in entsprechende Steuerbefehle für eine Einfahrtsbeschränkung zugeordnete, z. B. motorischen, Aktuatoreinrichtung zur Aufhebung oder Herstellung der Einfahrtsbeschränkung umgewandelt werden. Grundsätzlich denkbar ist auch die Steuerung einer, z. B. akustischen oder optischen, Signalausgabeeinrichtung für den Straßenverkehr, insbesondere einer Verkehrsampel, zur Gabe wenigstens eines, z. B. akustischen und/oder optischen, Fahr- oder Stoppsignals an einen Verkehrsteilnehmer. Im Hinblick auf das vorstehende Beispiel eines in eine Garage ein- oder ausfahrenden Fahrzeugs ist sonach auch die Steuerung einer Signalausgabeeinrichtung zur Gabe eines, z. B. akustischen und/oder optischen, Ein- oder Ausfahrsignals.

Zur elektrischen Versorgung der in das Bauelement integrierten elektrischen bzw. elektronischen Komponenten, d. h. insbesondere der Erfassungseinrichtung und der Übertragungseinrichtung, kann wenigstens eine diesen zugeordnete elektrische Energiespeichereinrichtung, welche zur elektrischen Versorgung wenigstens der Erfassungseinrichtung und/oder der Übertragungseinrichtung eingerichtet ist, wiederum in analoger Weise zu der Erfassungseinrichtung und der Übertragungseinrichtung, in das Schachtelement integriert sein. Die Energiespeichereinrichtung kann kabelgebunden oder berührungs- bzw. kabellos, d. h. insbesondere von außerhalb des Verbauorts eines das Schachtelement aufnehmenden Schachtbauwerks, mit elektrischer Energie versorgt, d. h. geladen, werden. Der Energiespeichereinrichtung kann sonach z. B. eine induktive oder kapazitive Ladeeinrichtung zugehörig sein. Es ist derart nicht notwendig, in das das Schachtelement aufnehmende Schachtbauwerk zu steigen, um die Energiespeichereinrichtung mit elektrischer Energie zu versorgen. Die Ladeeinrichtung kann bzw. dieser zugehörige Ladeelemente können räumlich getrennt von der Energiespeichereinrichtung angeordnet sein.

Eine zu der Integration der Erfassungseinrichtung bzw. der Übertragungseinrichtung analoge Integration in den Grundkörper ist selbstverständlich auch für die Auswerteeinrichtung, die Energiespeichereinrichtung und die Ladeeinrichtung möglich.

An oder in einer freiliegenden Fläche des Grundkörpers kann wenigstens ein mit der grundkörperseitig integrierten Übertragungseinrichtung und/oder der grundkörperseitig integrierten Erfassungseinrichtung und/oder einer grundkörperseitig integrierten Auswerteeinrichtung und/oder einer grundkörperseitig integrierten Energiespeichereinrichtung und/oder einer grundkörperseitig integrierten Ladeeinrichtung gekoppeltes Anschlusselement angeordnet oder ausgebildet sein. Das Anschlusselement ist zum Anschluss an ein korrespondierendes Gegenanschlusselement zur Übertragung von Kommunikationssignalen und/oder von Energie auf das korrespondierende Gegenanschlusselement und/oder zum Empfang von von einem mit dem korrespondierenden Gegenanschlusselement gekoppelten Kommunikationspartner übertragenen Kommunikationssignalen und/oder von Energie eingerichtet. Entsprechende Anschlusselemente können z. B. Steckerelemente ausgebildet sein oder solche umfassen. Derart ist eine Kopplung des Schachtelements mit weiteren Einrichtungen, insbesondere weiteren Schachtelementen, möglich.

Lediglich beispielhaft gezeigt wird ferner ein Schachtbauwerk. Das Schachtbauwerk kann z. B. einen Teil eines zumindest abschnittsweise oberhalb oder zumindest abschnittsweise unterhalb der Erdoberfläche verlaufenden Ent- oder Versorgungsschachtsystems bilden. Ein Beispiel für ein unterhalb der Erdoberfläche verlaufendes Ent- oder Versorgungsschachtsystem ist eine Kanalisation. Das Schachtbauwerk zeichnet sich dadurch aus, dass es wenigstens ein wenigstens einen Abschnitt des Schachtbauwerks bildendes, wie hierin beschriebenes Schachtelement umfasst. Sämtliche Ausführungen im Zusammenhang mit dem hierin beschriebenen Schachtelement gelten analog für das Schachtbauwerk.

Weitere Vorteile, Merkmale und Einzelheiten ergeben sich aus den in den Zeichnungsfiguren dargestellten Beispielen. Dabei zeigen:
- Fig. 1, 2: je eine schematische Prinzipdarstellung eines Schachtelements gemäß einem exemplarischen Beispiel; und

- Fig. 3: eine Prinzipdarstellung eines Übertragungssystems gemäß einem Ausführungsbeispiel.

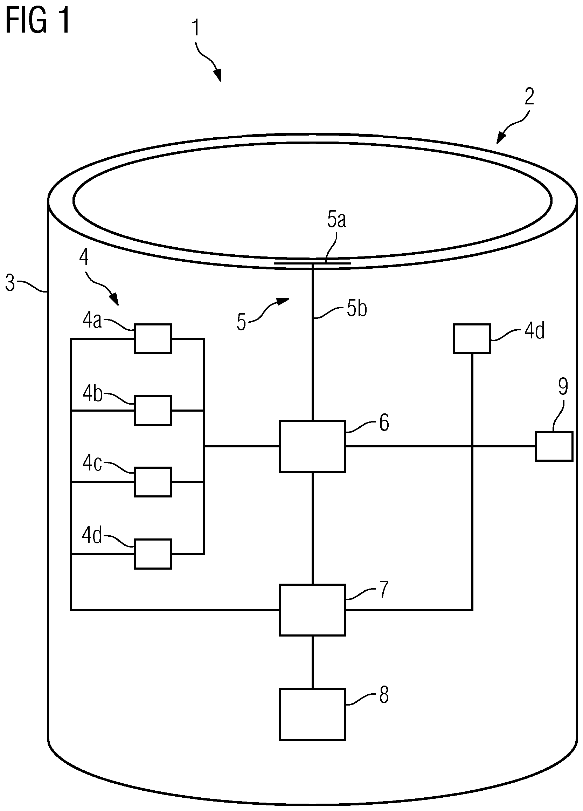

Fig. 1 zeigt eine Prinzipdarstellung eines Schachtelements 1 gemäß einem ersten illustrativen Beispiel in einer schematischen Ansicht. Das Schachtelement 1 dient der Ausbildung eines Schachtbauwerks 2, welches einen Teil eines Ent- oder Versorgungsschachtsystems, d. h. z. B. einer Kanalisation, bildet. Das Schachtbauwerk 2 kann zumindest abschnittsweise oberhalb oder zumindest abschnittsweise unterhalb der Erdoberfläche angeordnet oder ausgebildet sein.

Das Schachtelement 2 umfasst einen einen Hohlraum begrenzenden Grundkörper 3. Der Grundkörper 3 hat eine hohlzylindrische geometrische Grundform; denkbar wären jedoch auch andere, d. h. z. B. (viel)eckige geometrische Grundformen.

Der Grundkörper 3 kann aus einem, gegebenenfalls aushärtbaren und/oder gießfähigen, Baustoff, z. B. Beton, oder aus einem, insbesondere extrusions- bzw. spritzgießfähigen, thermoplastischen, gegebenenfalls polyolefinischen, Kunststoff, d. h. z. B. PA, PC, PE, PP, PS, gebildet sein.

In den Grundkörper 3 ist eine Erfassungseinrichtung 4 und eine dieser zugeordnete, d. h. mit dieser datenmäßig gekoppelte, Übertragungseinrichtung 5 integriert. Die Erfassungseinrichtung 4 und die Übertragungseinrichtung 5 sind vollständig in der Wandung des Grundkörpers 3 angeordnet und somit baulich mit dem Grundkörper 3 verbunden. Die bauliche Verbindung kann (beschädigungs- bzw. zerstörungsfrei) lösbar bzw. nicht (beschädigungs- bzw. zerstörungsfrei) lösbar sein.

In dem in Fig. 1 gezeigten ersten Fall ist die bauliche Verbindung nicht (beschädigungs- bzw. zerstörungsfrei) lösbar. Die Erfassungseinrichtung 4 bzw. die dieser zugehörigen Erfassungselemente 4a - 4d respektive die Übertragungseinrichtung 5 bzw. die dieser zugehörigen Übertragungselemente 5a, 5b sind (unmittelbar) von dem den Grundkörper 3 bildenden Material umgeben; die Erfassungseinrichtung 4 und die Übertragungseinrichtung 5 wurden im Rahmen der Herstellung des Grundkörpers 3 mit dem den Grundkörper 3 bildenden Material umgossen.

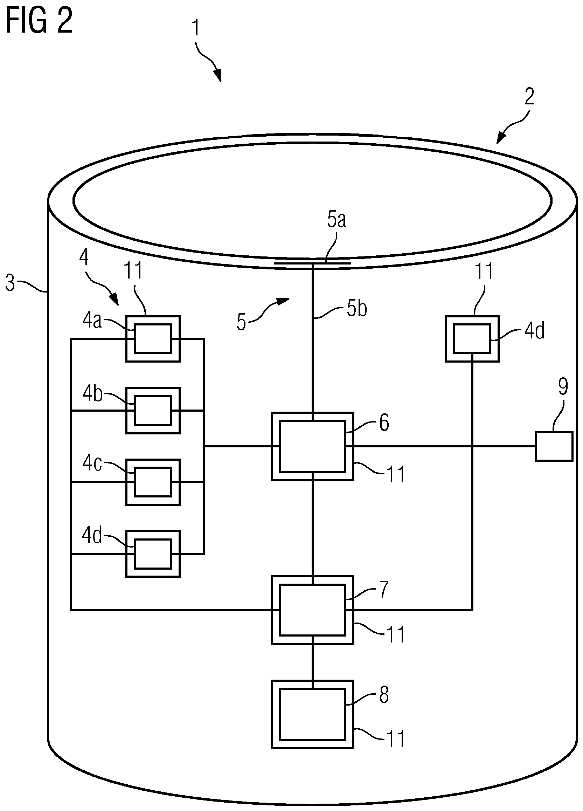

In dem in Fig. 2 gezeigten zweiten Fall ist die Erfassungseinrichtung 4 bzw. die dieser zugehörigen Erfassungselemente 4a - 4d respektive die Übertragungseinrichtung 5 bzw. die dieser Übertragungselemente 5a, 5b in hierfür grundkörperseitig vorgesehenen, insbesondere in einem freiliegenden oder freilegbaren, mithin zugänglichen, Bereich des Grundkörpers 3 angeordneten oder ausgebildeten, durch Ausnehmungen in dem Grundkörper 3 gebildeten, Aufnahmebereichen 11 angeordnet. Die Aufnahmebereiche 11 sind beispielhaft im Bereich einer inneren Mantelfläche des Grundkörpers 3 angeordnet. Denkbar wäre auch eine Anordnung im Bereich einer äußeren Mantelfläche und/oder einer Stirnfläche des Grundkörpers 3. Jeweilige Aufnahmebereiche 11 können über diesen zugeordnete, z. B. klappenartige, Verschlusselemente (nicht gezeigt) (reversibel) verschließbar sein. In dem verschlossenen Zustand sind die in den jeweiligen Aufnahmebereichen 11 aufgenommenen Einrichtungen vor äußeren Einflüssen geschützt, in dem offenen Zustand ist ein Zugriff auf die in den jeweiligen Aufnahmebereichen 11 aufgenommenen Einrichtungen möglich.

Die Erfassungseinrichtung 4 ist zur Erfassung wenigstens einer Erfassungsgröße eingerichtet. Bei der Erfassungsgröße kann es sich um eine chemische und/oder physikalische Größe, d. h. z. B. Atmosphäre, Dichte, Druck, Feuchtigkeit, pH-Wert, Temperatur, etc., des Schachtelements 1 und/oder eines innerhalb des durch den Grundkörper 3 begrenzten Hohlraums bzw. innerhalb des das Schachtelement 1 aufnehmenden Schachtbauwerks 2 befindlichen bzw. strömenden (fluiden) Mediums handeln. Hierfür ist ein erstes messsonden- oder sensorartiges Erfassungselement 4a vorgesehen, welches z. B. eine geeignete Sensorik zur Erfassung der chemischen Zusammensetzung eines in dem Hohlraum befindlichen (fluiden) Mediums, z. B. Gas, umfasst. Die Sensorik kann ein auf eine oder mehrere chemische Substanzen, z. B. Methan, sensibles Sensorelement umfassen.

Für ein in dem Hohlraum strömendes (fluides) Medium, z. B. Abwasser, lassen sich auch Strömungsparameter, d. h. z. B. die Strömungsgeschwindigkeit, erfassen. Hierfür ist ein zweites messsonden- oder sensorartiges Erfassungselement 4b vorgesehen, welches eine geeignete Sensorik z. B. zur Erfassung der Strömungsgeschwindigkeit eines in dem Hohlraum strömenden (fluiden) Mediums, z. B. Abwasser, umfasst. Die Sensorik kann z. B. ein optisches Sensorelement, d. h. z. B. eine Kamera, umfassen.

Bei einer Erfassungsgröße kann es sich auch um einen Pegel (Wasserstand) in dem Hohlraum bzw. in dem das Schachtelement 1 aufnehmenden Schachtbauwerk 2 handeln. Hierfür ist ein drittes messsonden- oder sensorartiges Erfassungselement 4c vorgesehen, welches eine geeignete Sensorik z. B. zur Erfassung des Wasserstands in dem Hohlraum bzw. in dem das Schachtelement 1 aufnehmenden Schachtbauwerk 2 umfasst. Die Sensorik kann z. B. induktive oder kapazitive Sensorelemente umfassen.

Selbstverständlich ist die vorgenannte Aufzählung jeweiliger Erfassungselemente 4a - 4c lediglich beispielhaft; es kann also auch eine andere als die genannte Anzahl an Erfassungselementen 4a - 4c bzw. anders funktionalisierte Erfassungselemente 4a - 4c vorhanden sein. Grundsätzlich können entsprechende Erfassungselemente 4a - 4c entsprechende Erfassungsgrößen z. B. akustisch, elektrisch, elektromagnetisch oder optisch erfassen.

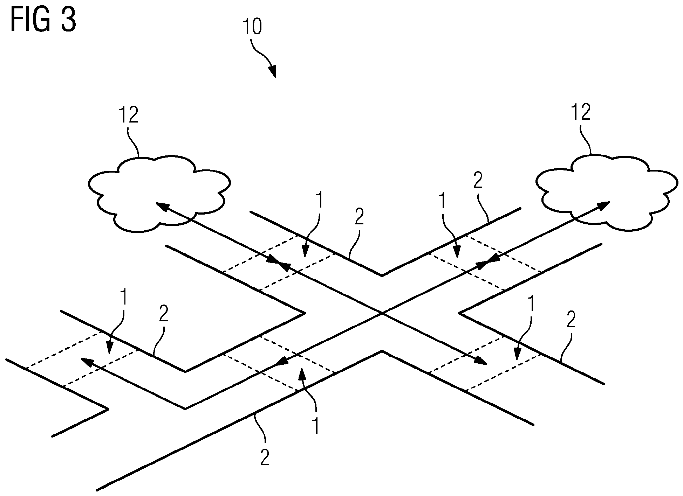

Die Übertragungseinrichtung 5 ist zur Übertragung von von der Erfassungseinrichtung 4 erfassten Erfassungsgrößen, im Allgemeinen Kommunikationssignalen, an wenigstens einen Kommunikationspartner und zum Empfang von wenigstens einem Kommunikationspartner übertragenen Kommunikationssignalen eingerichtet. Bei einem Kommunikationspartner kann es sich um eine (mobile oder stationäre) weitere Übertragungseinrichtung (nicht gezeigt), z. B. in Form eines Mobiltelefons, Smartphones, Tablet-PCs, Laptops, etc., und/oder um ein wie in Fig. 3 durch das Bezugszeichen 12 angedeutetes globales oder lokales Daten- bzw. Übertragungsnetzwerk (Intranet, Internet) handeln.

Die Übertragungseinrichtung 5 umfasst zur Übertragung, d. h. zum Senden sowie zum Empfangen von Kommunikationssignalen geeignete Übertragungselemente 5a, 5b (Sende- bzw. Empfangselemente).

Ein freies Ende eines ersten Übertragungselements 5a kann aus einem freiliegenden Abschnitt, hier einem freiliegenden Stirnflächenabschnitt, des Grundkörpers 3 ragen. Über dieses Übertragungselement 5a können Kommunikationssignale an einen Kommunikationspartner gesendet bzw. von einem Kommunikationspartner gesendete Kommunikationssignale empfangen werden. Bei dem ersten Übertragungselement 5a handelt es sich um ein Antennenelement. Die Übertragung entsprechender Kommunikationssignale vermittels des ersten Übertragungselements 5a erfolgt typischerweise kabellos ("wireless"); zur kabellosen Übertragung kommen grundsätzlich jedwede kabellose Übertragungsarten bzw. -standards in Betracht; lediglich beispielhaft wird auf Bluetooth, GSM, DECT oder im Sub-Gigahertzbereich arbeitende Übertragungsarten bzw. -standards verwiesen. Zur Übertragung kommen auch lizensierte oder lizenzfreie Bänder in Betracht, insbesondere alle ISM-Bänder (engl. Industrial, Scientific and Medical Band).

Das erste Übertragungselement 5a ist mit einem zweiten Übertragungselement 5b verbunden, welches die Verbindung des ersten Übertragungselements 5a mit der Erfassungseinrichtung 4, d. h. den jeweiligen Erfassungselementen 4a - 4d, herstellt. Das zweite Übertragungselement 5b erstreckt sich entsprechend zwischen dem ersten Übertragungselement 5a und den jeweiligen Erfassungselementen 4a - 4d durch den Grundkörper 3.

Ersichtlich ist das zweite Übertragungselement 5b nicht direkt, sondern mittelbar, d. h. unter Zwischenschaltung einer der Erfassungseinrichtung 4 zugeordneten, in zu der Erfassungseinrichtung 4 und der Übertragungseinrichtung 5 entsprechender Weise ebenso in den Grundkörper 3 integrierten Auswerteeinrichtung 6, mit den jeweiligen Erfassungselementen 4a - 4d verbunden.

Die Auswerteeinrichtung 6 ist zur Auswertung der von der Erfassungseinrichtungseinrichtung 5 erfassten Erfassungsgrößen im Hinblick auf wenigstens ein Auswertungskriterium eingerichtet und umfasst hierfür im Hinblick auf jeweilige Auswertungskriterien programmierte Auswertealgorithmen.

Ein entsprechendes Auswertungskriterium kann eine schachtspezifische Auswertung erfasster Erfassungsgrößen ermöglichen. Hierunter ist eine Auswertung erfasster Erfassungsgrößen im Hinblick auf bestimmte Charakteristika des Schachtbauwerks 2 bzw. eines in dem Schachtbauwerk 2 befindlichen bzw. strömenden (fluiden) Mediums zu verstehen. Beispielsweise kann die chemische Zusammensetzung, die Dichte, der Druck, die Temperatur, etc. eines in dem Hohlraum befindlichen bzw. strömenden (fluiden) Mediums im Hinblick auf bestimmte Grenzwerte ausgewertet werden. Denkbar ist auch, dass ein in dem Hohlraum befindliches bzw. strömendes (fluides) Medium qualitativ oder quantitativ im Hinblick auf das Vorhandensein bestimmter chemischer Substanzen, das Über- oder Unterschreiten bestimmter Grenzwerte, insbesondere auch eines Wasserstandgrenzwerts, etc. ausgewertet wird.

Ein entsprechendes Auswertungskriterium kann jedoch auch eine nicht-schachtspezifische Auswertung erfasster Erfassungsgrößen ermöglichen. Hierunter ist eine Auswertung erfasster Erfassungsgrößen im Hinblick auf bestimmte Charakteristika in der Umgebung um das Schachtbauwerk 2 zu verstehen. Beispielsweise kann ein Objekt (unmittelbar) oberhalb des Schachtelements 1 über der Erfassungseinrichtung 4 zugehörige Erfassungselemente 4d, z. B. in Form von Dehnungs- oder Druckerfassungselementen, ermittelt werden, da das durch den Pfeil F dargestellte Gewicht des Objekts in dem Schachtelement 1 eine spezielle Kraftverteilung, z. B. Druckverteilung, erzeugt, d. h. sich speziell auf die gegebenen Kräfteverhältnisse, z. B. Druckverhältnisse, in dem Schachtelement 1 auswirkt. In entsprechender Weise können Bewegungen bzw. Bewegungsprofile eines Objekts, gegebenenfalls örtlich, insbesondere richtungsabhängig, und/oder zeitlich aufgelöst, relativ zu dem Schachtelement 1 erfasst werden. Hierfür sind zweckmäßig mehrere Erfassungselemente 4d umfangsmäßig verteilt in den Grundkörper 3 integriert.

Konkret kann z. B. ein Verkehrsstrom oberhalb des Schachtelements 1 ermittelt und, gegebenenfalls örtlich, insbesondere richtungsabhängig, und/oder zeitlich aufgelöst, im Hinblick auf bestimmte verkehrstechnische Kenngrößen, d. h. z. B. spezifische Verkehrsteilnehmer, (mittlere) Verkehrsdichte, (mittlere) Verkehrsgeschwindigkeit, etc., kurz im Zusammenhang mit dem Verkehrsfluss stehende verkehrstechnische Kenngrößen ausgewertet werden. Befindet sich das Schachtelement 1 im Bereich eines Eingangs zu einem Gebäude kann über eine entsprechende Auswertung die Anzahl an in das Gebäude eingehender oder aus dem Gebäude ausgehendender Objekte ermittelt werden. Handelt es sich bei dem Gebäude um eine Garage kann z. B. eine Anzahl ein- und ausfahrender Fahrzeuge ermittelt werden.

Die Auswerteeinrichtung 6 ist auf Grundlage der Auswertung entsprechender Erfassungsgrößen zur Erzeugung von Steuergrößen zur Steuerung wenigstens einer steuerbaren technischen Einrichtung (nicht gezeigt) eingerichtet sein. Das Schachtelement 1 kann über die Übertragungseinrichtung 5 mit der technischen Einrichtung gekoppelt sein. Für das vorgenannte Beispiel einer Ermittlung eines in eine Garage einfahrenden Fahrzeugs kann die Auswerteeinrichtung 6 z. B. zur Erzeugung von eine Einfahrtsbeschränkungseinrichtung, d. h. z. B. eine Schranke, ein Tor, etc., aufhebenden (und gegebenenfalls wiederherstellenden) Steuergrößen eingerichtet sein. Entsprechende Steuergrößen können über die Übertragungseinrichtung 5 an eine der jeweiligen Einfahrtsbeschränkungseinrichtung zugeordnete Empfangseinrichtung übertragen und dort in entsprechende Steuerbefehle für eine Einfahrtsbeschränkung zugeordnete, z. B. motorischen, Aktuatoreinrichtung zur Aufhebung oder Herstellung der Einfahrtsbeschränkung umgewandelt werden.

Zur elektrischen Versorgung der in das Schachtelement 1 integrierten elektrischen bzw. elektronischen Komponenten ist eine elektrische Energiespeichereinrichtung 7, welche zur elektrischen Versorgung wenigstens der Erfassungseinrichtung 4 und der Übertragungseinrichtung 5 eingerichtet ist, wiederum in analoger Weise zu der Erfassungseinrichtung 4 und der Übertragungseinrichtung 5, in das Schachtelement 1 integriert. Die Energiespeichereinrichtung 7 kann berührungs- bzw. kabellos, d. h. insbesondere von außerhalb des Verbauorts des Schachtbauwerks 2, mit elektrischer Energie versorgt, d. h. geladen, werden. Der Energiespeichereinrichtung 7 ist eine z. B. eine induktive oder kapazitive Ladeeinrichtung 8 zugehörig.

An oder in einer freiliegenden Fläche des Grundkörpers 3 ist ein mit der grundkörperseitig integrierten Übertragungseinrichtung 5 und/oder der grundkörperseitig integrierten Erfassungseinrichtung 4 gekoppeltes Anschlusselement 9, z. B. in Form eines Steckerelements, ausgebildet. Das Anschlusselement 9 ist zum Anschluss an ein korrespondierendes Gegenanschlusselement (nicht gezeigt) zur Übertragung von Kommunikationssignalen auf das korrespondierende Gegenanschlusselement und/oder zum Empfang von von einem mit dem korrespondierenden Gegenanschlusselement gekoppelten Kommunikationspartner übertragenen Kommunikationssignalen eingerichtet. Derart ist eine Kopplung des Schachtelements 1 mit weiteren Einrichtungen, insbesondere weiteren Schachtelementen 1, möglich.

Fig. 3 zeigt eine Prinzipdarstellung eines Übertragungssystems 10 gemäß einem Ausführungsbeispiel. Das Übertragungssystem 10 dient zur uni- oder multidirektionalen Übertragung von Kommunikationssignalen an wenigstens einen Kommunikationspartner. Die Übertragung ist durch die Doppelpfeile angedeutet. Ersichtlich umfasst das Übertragungssystem 10 mehrere miteinander zur Übertragung von Kommunikationssignalen kommunizierende Schachtelemente 1 als (jeweilige) Teile mehrerer Schachtbauwerke 2. Das Übertragungssystem 10 ist zur Übertragung von Kommunikationssignalen innerhalb eines Schachtbauwerks 2 und/oder zur Übertragung von Kommunikationssignalen zwischen mehreren Schachtbauwerken 2 eingerichtet. Selbstverständlich ist das Übertragungssystem 10 auch zur Übertragung von Kommunikationssignalen an ein lokales oder globales Kommunikationsnetzwerk, d. h. z. B. das Internet, 12 eingerichtet.

## Patentansprüche

1. Übertragungssystem (10) zur Übertragung von Kommunikationssignalen an wenigstens einen Kommunikationspartner, **dadurch gekennzeichnet, dass** es wenigstens zwei miteinander zur Übertragung von Kommunikationssignalen kommunizierende Schachtelemente (1) zur Ausbildung wenigstens eines Abschnitts eines Schachtbauwerks (2) als Teile eines oder mehrerer Schachtbauwerke (2) umfasst, welche jeweils einen einen Hohlraum begrenzenden Grundkörper (3) umfassen, wobei in den Grundkörper (3) wenigstens eine Erfassungseinrichtung (4), welche zur Erfassung wenigstens einer Erfassungsgröße eingerichtet ist, und eine dieser zugeordnete Übertragungseinrichtung (5), welche zur Übertragung von von der Erfassungseinrichtung (4) erfassten Erfassungsgrößen an wenigstens einen Kommunikationspartner eingerichtet ist, integriert ist, wobei
das Übertragungssystem (10) zur Übertragung von Kommunikationssignalen innerhalb eines Schachtbauwerks (2) und/oder zwischen mehreren Schachtbauwerken (2) eingerichtet ist, die Übertragungseinrichtung (5) zusätzlich zum Empfang von von wenigstens einem Kommunikationspartner übertragenen Kommunikationssignalen eingerichtet ist und dass die Erfassungseinrichtung (5)
- zur Erfassung einer wenigstens einen chemischen und/oder physikalischen Parameter, insbesondere Atmosphäre, Dichte, Druck, Feuchtigkeit, pH-Wert, Temperatur, des Schachtelements und/oder eines innerhalb des durch den Grundkörper (3) begrenzten Hohlraums strömenden Mediums beschreibenden Erfassungsgröße eingerichtet ist, und/oder
- zur Erfassung einer einen Strömungsparameter eines innerhalb des durch den Grundkörper (3) begrenzten Hohlraums strömenden Mediums beschreibenden Erfassungsgröße eingerichtet ist, und/oder
- zur Erfassung einer einen Pegel eines innerhalb des durch den Grundkörper (3) begrenzten Hohlraums strömenden Mediums beschreibenden Erfassungsgröße eingerichtet ist.

2. Ubertragungssystem nach Anspruch 1, **gekennzeichnet durch** eine der Erfassungseinrichtung (4) zugeordnete, insbesondere in den Grundkörper integrierte, Auswerteeinrichtung (6), welche zur Auswertung von von der Erfassungseinrichtung (4) erfassten Erfassungsgrößen im Hinblick auf wenigstens ein Auswertungskriterium eingerichtet ist.

3. Ubertragungssystem nach Anspruch 2, **dadurch gekennzeichnet, dass** die Auswerteeinrichtung (6) auf Grundlage einer im Hinblick auf wenigstens ein Auswertungskriterium ausgewerteten Erfassungsgröße zur Erzeugung von Steuergrößen zur Steuerung wenigstens einer externen Einrichtung eingerichtet ist.

4. Ubertragungssystem nach einem der vorhergehenden Ansprüche, **gekennzeichnet durch** eine wenigstens der Erfassungseinrichtung (4) und/oder der Übertragungseinrichtung (5) zugeordnete elektrische Energiespeichereinrichtung (7), welche zur elektrischen Versorgung der Erfassungseinrichtung (4) und/oder der Übertragungseinrichtung (5) eingerichtet ist.

5. Ubertragungssystem nach einem der vorhergehenden Ansprüche, **dadurch gekennzeichnet, dass** die Erfassungseinrichtung (4) und/oder die Übertragungseinrichtung (5) und/oder die Auswerteeinrichtung (6) und/oder die Energiespeichereinrichtung (7) lösbar oder unlösbar von diesem in den Grundkörper (3) integriert sind.

6. Ubertragungssystem nach einem der vorhergehenden Ansprüche, **gekennzeichnet durch** wenigstens ein an oder in einer freiliegenden Fläche des Grundkörpers (3) angeordnetes oder ausgebildetes, mit der grundkörperseitig integrierten Übertragungseinrichtung (5) und/oder der grundkörperseitig integrierten Erfassungseinrichtung (4) und/oder der grundkörperseitig integrierten Auswerteeinrichtung (6) gekoppeltes Anschlusselement (9) zum Anschluss an ein korrespondierendes Gegenanschlusselement zur Übertragung von Kommunikationssignalen auf das korrespondierende Gegenanschlusselement und/oder zum Empfang von von einem mit dem korrespondierenden Gegenanschlusselement gekoppelten Kommunikationspartner übertragenen Kommunikationssignalen.

7. Ubertragungssystem nach einem der vorhergehenden Ansprüche, **dadurch gekennzeichnet, dass** der Grundkörper (3) aus einem Baustoff, insbesondere Beton, oder aus einem Werkstoff, insbesondere Metall oder Kunststoff, gebildet ist.

## Claims

1. Transmission system (10) for transmitting communication signals to at least one communication partner, **characterised in that** it comprises at least two manhole elements (1) which communicate with one another in order to transmit communication signals and are intended for forming at least one portion of a manhole structure (2) as parts of one or more manhole structures (2), which each comprise a main body (3) that defines a cavity, wherein at least one acquisition device (4), which is designed for acquiring at least one acquisition variable, and a transmission device (5) which is associated therewith and is designed for transmitting acquisition variables, acquired by the acquisition device (4), to at least one communication partner, is integrated into the main body (3), wherein
the transmission system (10) is designed for transmitting communication signals within one manhole structure (2) and/or among a plurality of manhole structures (2),
the transmission device (5) is additionally designed for receiving communication signals transmitted from at least one communication partner, and **in that**
the acquisition device (5)
- is designed for acquiring an acquisition variable that describes at least one chemical and/or physical parameter, in particular atmosphere, density, pressure, humidity, pH, temperature, of the manhole element and/or of a medium flowing inside the cavity delimited by the main body (3), and/or
- is designed for acquiring an acquisition variable that describes a flow parameter of a medium flowing inside the cavity delimited by the main body (3), and/or
- is designed for acquiring an acquisition variable that describes a level of a medium flowing inside the cavity delimited by the main body (3).

2. Transmission system according to claim 1, **characterised by** an evaluation device (6) which is associated with the acquisition device (4), in particular integrated into the main body (3), and which is designed for evaluating acquisition variables, acquired by the acquisition device (4), in view of at least one evaluation criterion.

3. Transmission system according to claim 2, **characterised in that** the evaluation device (6) is designed for generating control variables, for controlling at least one external device, on the basis of an acquisition variable evaluated in view of at least one evaluation criterion.

4. Transmission system according to any of the preceding claims, **characterised by** an energy storage device (7) which is associated with at least the acquisition device (4) and/or the transmission device (5) and is designed for supplying the acquisition device (4) and/or the transmission device (5) with electricity.

5. Transmission system according to any of the preceding claims, **characterised in that** the acquisition device (4) and/or the transmission device (5) and/or the evaluation device (6) and/or the energy storage device (7) are integrated, detachably or non-detachably therefrom, into the main body (3).

6. Transmission system according to any of the preceding claims, **characterised by** at least one connection element (9) which is arranged or formed on or in an exposed surface of the main body (3), is coupled to the transmission device (5) integrated on the main body side and/or the acquisition device integrated on the main body side and/or the evaluation device (6) integrated on the main body side, and is intended for connection to a corresponding mating connection element for transmitting communication signals to the corresponding mating connection element and/or for receiving communication signals transmitted by a communication partner coupled to the corresponding mating connection element.

7. Transmission system according to any of the preceding claims, **characterised in that** the main body (3) is formed of a construction material, in particular, concrete, or of a material, in particular metal or plastics material.

## Revendications

1. Système de transmission (10) pour la transmission de signaux de communication à au moins un partenaire de communication, **caractérisé en ce qu'**il comprend au moins deux éléments de regard (1) communiquant l'un avec l'autre pour la transmission de signaux de communication pour réaliser au moins une section d'un puits (2) en tant que parties d'un ou de plusieurs puits (2), lesquelles comprennent respectivement un corps de base (3) délimitant une espace creux, dans lequel sont intégrés dans le corps de base (3) au moins un dispositif de détection (4), lequel est mis au point pour détecter au moins une grandeur de détection, et un dispositif de transmission (5) associé à celui-ci, lequel est mis au point pour transmettre des grandeurs de détection, détectées par le dispositif de détection (4), à au moins un partenaire de communication, dans lequel
le système de transmission (10) est mis au point pour transmettre des signaux de communication à l'intérieur d'un puits (2) et/ou entre plusieurs puits (2),
le dispositif de transmission (5) est mis au point en supplément pour recevoir des signaux de communication transmis par au moins un partenaire de communication, et que
le dispositif de détection (5)
- est mis au point pour détecter une grandeur de détection décrivant au moins un paramètre chimique et/ou physique, en particulier l'atmosphère, la densité, la pression, l'humidité, la valeur pH, la température de l'élément de regard et/ou d'un milieu s'écoulant à l'intérieur de l'espace creux délimité par le corps de base (3), et/ou
- est mis au point pour détecter une grandeur de détection décrivant un paramètre d'écoulement d'un milieu s'écoulant à l'intérieur de l'espace creux délimité par le corps de base (3), et/ou
- est mis au point pour détecter une grandeur de détection décrivant un seuil d'un milieu s'écoulant à l'intérieur de l'espace creux délimité par le corps de base (3).

2. Système de transmission selon la revendication 1, **caractérisé par** un dispositif d'évaluation (6) associé au dispositif de détection (4), intégré en particulier dans le corps de base, lequel est mis au point pour évaluer des grandeurs de détection détectées par le dispositif de détection (4) en ce qui concerne au moins à un critère d'évaluation.

3. Système de transmission selon la revendication 2, **caractérisé en ce que** le dispositif d'évaluation (6) est mis au point pour produire des grandeurs de commande pour commander au moins un dispositif externe sur la base d'une grandeur de détection évaluée en ce qui concerne au moins un critère d'évaluation.

4. Système de transmission selon l'une quelconque des revendications précédentes, **caractérisé par** un dispositif de stockage d'énergie (7) électrique associé au moins au dispositif de détection (4) et/ou au dispositif de transmission (5), lequel est mis au point pour alimenter électriquement le dispositif de détection (4) et/ou le dispositif de transmission (5).

5. Système de transmission selon l'une quelconque des revendications précédentes, **caractérisé en ce que** le dispositif de détection (4) et/ou le dispositif de transmission (5) et/ou le dispositif d'évaluation (6) et/ou le dispositif de stockage d'énergie (7) sont intégrés dans le corps de base (3) de manière à pouvoir être retirés ou non de celui-ci.

6. Système de transmission selon l'une quelconque des revendications précédentes, **caractérisé par** au moins un élément de raccordement (9) disposé ou réalisé dans une face dégagée du corps de base (3), couplé au dispositif de transmission (5) intégré côté corps de base et/ou au dispositif de détection (4) intégré côté corps de base et/ou au dispositif d'évaluation (6) intégré côté corps de base pour le raccordement à un contre-élément de raccordement correspondant pour la transmission de signaux de communication sur le contre-élément de raccordement correspondant et/ou pour recevoir des signaux de communication transmis par un partenaire de communication couplé au contre-élément de raccordement correspondant.

7. Système de transmission selon l'une quelconque des revendications précédentes, **caractérisé en ce que** le corps de base (3) est formé à partir d'une matière de construction, en particulier de béton, ou à partir d'un matériau, en particulier de métal ou de matière plastique.
